# EUROPEAN PATENT APPLICATION

(11) **EP 4 614 688 A1**
(43) Date of publication of application: **10.09.2025**
(21) Application number: 23907718.3
(22) Date of filing: 20.12.2023
(51) Int. Cl.: H01M 50/133, H01M 50/126, H01M 50/119, H01M 50/121, H01M 50/105

(54) **POUCH FILM LAMINATE AND SECONDARY BATTERY**

(30) Priority: 22.12.2022 KR 20220182365
(71) Applicant: LG Energy Solution, Ltd., Seoul 07335 (KR)
(72) Inventor: KIM, Sang Hun, Daejeon 34122 (KR); KANG, Gyung Soo, Daejeon 34122 (KR); LEE, Jae Ho, Daejeon 34122 (KR); YU, Hyung Kyun, Daejeon 34122 (KR); LEE, Ji Sun, Daejeon 34122 (KR)
(74) Representative: Plasseraud IP
(86) International application number: PCT/KR2023/021082
(87) International publication number: WO 2024/136435

(57) **Abstract**

A pouch film laminate according to the present invention includes a substrate layer, a gas barrier layer, and a sealant layer, which are sequentially stacked, wherein the gas barrier layer includes stainless steel and has a thickness of 50 µm or more, and a thickness of the substrate layer ranges from 10% to 30% of the thickness of the gas barrier layer.

## Description

### [Technical Field]

### CROSS-REFERENCE TO RELATED APPLICATIONS

This application claims priority to and the benefit of Korean Patent Application No. 10-2022-0182365, filed December 22, 2022, the disclosure of which is incorporated herein by reference in its entirety.

### Technical Field

The present invention relates to a pouch film laminate and a secondary battery manufactured by molding the same.

### [Background Art]

In general, types of secondary batteries include nickel cadmium batteries, nickel hydrogen batteries, lithium ion batteries, lithium ion polymer batteries, and the like. These secondary batteries have been applied and used not only in small-sized products such as digital cameras, P-DVDs, MP3Ps, mobile phones, PDAs, portable game devices, power tools, E-bikes, and the like, but also in large-sized products requiring high output such as electric vehicles or hybrid vehicles, as well as for backup power storage devices and power storage devices that store surplus generated power or renewable energy.

To manufacture such a secondary battery, an electrode active material slurry is first applied onto a positive electrode current collector and a negative electrode current collector to manufacture positive and negative electrodes, and the positive and negative electrodes are then laminated on both sides of a separator to form an electrode assembly having a predetermined shape. Then, the electrode assembly is accommodated in a battery case, followed by electrolyte injection and sealing.

Secondary batteries are classified into pouch-type and can-type secondary batteries, depending on the material of the case configured to accommodate the electrode assembly. The pouch-type secondary batteries have a structure in which the electrode assembly is accommodated in a pouch made of a flexible polymer material. The can-type secondary batteries have a structure in which the electrode assembly is accommodated in a case made of materials such as metal, plastic, or the like.

A pouch, which is a case of the pouch-type secondary battery, is manufactured by performing press processing on a flexible pouch film laminate to form a cup part. Once the cup part is formed, a secondary battery may be manufactured by accommodating an electrode assembly in an inner accommodation space of the cup part and sealing a sealing portion.

Generally, a pouch film laminate is formed of a plurality of layers in which a substrate layer is laminated on one surface of a gas barrier layer made of a metal and a sealant layer is laminated on the other surface of the gas barrier layer. In the case of an aluminum pouch in which aluminum is applied to the gas barrier layer, it has an advantage of being lightweight and being able to complement the electrochemical properties of the electrode assembly and electrolyte and secure a heat dissipation property and the like while securing mechanical strength above a certain level. However, aluminum pouches have a problem of melting of deforming when the pressure and temperature inside a cell rise due to a fire and the like. Therefore, technology is being developed to apply stainless steel instead of aluminum to the gas barrier layer to prevent deformation due to high temperature and high pressure. However, when stainless steel is applied to a metal barrier layer, there is a problem in that the moldability of the pouch deteriorates.

### [Disclosure]

### [Technical Problem]

According to the present invention, there are provided a pouch film laminate capable of improving moldability while securing the insulation of a pouch, which includes stainless steel, and a pouch-type secondary battery.

### [Technical Solution]

According to one embodiment of the present invention, a pouch film laminate including a substrate layer, a gas barrier layer, and a sealant layer, which are sequentially stacked, is provided, wherein the gas barrier layer includes stainless steel, a thickness of the gas barrier layer is 50 µm or more, and a thickness of the substrate layer ranges from 10% to 30% of the thickness of the gas barrier layer.

The pouch film laminate according to the present invention may have a thickness of 200 µm or less.

According to the present invention, the thickness of the substrate layer may range from 2.5% to 6.5% of the thickness of the pouch film laminate. Specifically, the thickness of the substrate layer may range from 5 µm to 20 µm. Also, the substrate layer may include polyethylene terephthalate (PET).

According to the present invention, the gas barrier layer may have a thickness of 50 µm to 100 µm, and the gas barrier layer may have a melting point of 1,000°C or higher.

The stainless steel included in the gas barrier layer may contain chromium in an amount of 10% by weight to 20% by weight, and may contain nickel in an amount of 5% by weight to 20% by weight.

According to another embodiment of the present invention, a pouch-type secondary battery including a pouch-type battery case in which an electrode assembly is accommodated is provided, wherein the pouch-type battery case includes a pouch film laminate, and the pouch film laminate includes a substrate layer, a gas barrier layer, and a sealant layer, which are sequentially stacked, wherein the gas barrier layer includes stainless steel, a thickness of the gas barrier layer is 50 µm or more, and a thickness of the substrate layer ranges from 10% to 30% of the thickness of the gas barrier layer.

### [Advantageous Effects]

A pouch film laminate according to the present invention is characterized in that a gas barrier layer including stainless steel has a thickness of 50 µm or more, and a thickness of a substrate layer ranges from 10% to 30% of the thickness of the gas barrier layer. When the above conditions are met, the pouch film laminate can significantly improve the moldability of the pouch film laminate while securing insulation and chemical resistance, thereby securing a forming depth of the pouch. As a result, it is easy to implement a large-area pouch-type battery applied to electric vehicles using the pouch film laminate according to the present invention.

### [Description of Drawings]

FIG. 1 is a cross-sectional view of a pouch film laminate according to the present invention.
FIG. 2 is an exploded perspective view of a pouch-type secondary battery according to the present invention.

### [mode for carrying out the invention]

Advantages and features of the present invention and methods for achieving them will become clear with reference to embodiments described in detail below along with the accompanying drawings. However, the present invention may be implemented in various different forms and should not be construed as being limited to the embodiments disclosed below. Rather, these embodiments are merely provided so that the disclosure of the present invention will be thorough and complete and will fully convey the scope of the invention to those skilled in the art to which the present invention pertains. Accordingly, the present invention is only defined by the scope of the claims. Throughout the specification, like reference numerals refer to like elements.

Unless otherwise defined, all terms (including technical and scientific terms) used in this specification may be used with meanings that can be commonly understood by those skilled in the art to which the present invention pertains. Additionally, terms defined in commonly used dictionaries are not interpreted ideally or excessively unless clearly specifically defined.

The terminology used in this specification is for describing the embodiments of the present invention and is not intended to limit the present invention. In this specification, the singular forms also include plural forms, unless specifically stated otherwise in the context. As used in the specification, the term "comprises" and/or "comprising" does not exclude the presence or addition of one or more other elements in addition to the mentioned elements.

In this specification, when it is said that a part includes a certain component, this does not mean that other components are excluded, but that the part may further include other components, unless specifically stated to the contrary.

Throughout the specification, the phrase "A and/or B" means "A or B," or "A and B."

In this specification, the symbol "%" means weight percent unless explicitly stated otherwise.

### Pouch film laminate

A pouch film laminate according to the present invention includes a substrate layer, a gas barrier layer, and a sealant layer, which are sequentially stacked, wherein the gas barrier layer includes stainless steel and has a thickness of 50 µm or more, and a thickness of the substrate layer ranges from 10% to 30% of the thickness of the gas barrier layer.

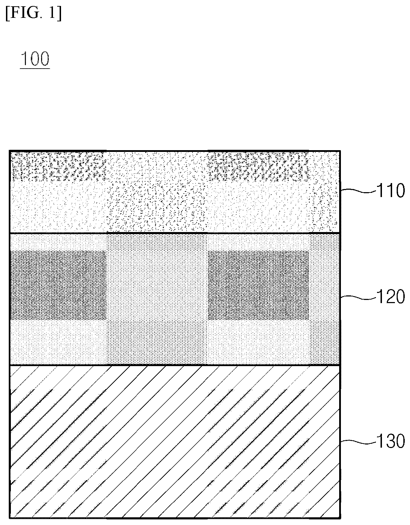

FIG. 1 is a cross-sectional view of a pouch film laminate 100 according to the present invention. As shown in FIG. 1, a substrate layer 110, a gas barrier layer 120, and a sealant layer 130 may be sequentially stacked in the pouch film laminate 100.

According to the present invention, a thickness of the substrate layer 110 may range from 10% to 30%, specifically from 10% to 20%, and more specifically from 10% to 15% of the thickness of the gas barrier layer 120. When the thickness of the substrate layer 110 is less than 10% of the thickness of the gas barrier layer 120, there is a problem in that the chemical resistance and insulation of a pouch may deteriorate. When the thickness of the substrate layer 110 is greater than 30% of the thickness of the gas barrier layer 120, the overall thickness of the pouch may increase, thereby reducing the energy density relative to the volume of the secondary battery.

When the thickness of the substrate layer 110 ranges from 10% to 30% of the thickness of the gas barrier layer 120, the formability of the pouch film laminate 100 may be affected more by the thickness of the gas barrier layer 120 than by the thickness of the substrate layer 110. Therefore, in the present invention, the thickness of the gas barrier layer 120 may be 50 µm or more so that the formability of the pouch film laminate 100 including the thin substrate layer 110 can be secured.

The thickness of the pouch film laminate 100 may be 200 µm or less, specifically 100 µm to 200 µm, and more specifically 100 µm to 180 µm. When the thickness of the pouch film laminate 100 satisfies the above range, the pouch cup part may be easily formed while securing sufficient mechanical strength to withstand the internal pressure of the pouch.

Hereinafter, each component of the pouch film laminate of the present invention will be described in more detail.

### (1) Substrate layer

The substrate layer 110 is formed on the outermost layer of the pouch film laminate 100 to protect a secondary battery from external friction and collisions. The substrate layer 110 is made of a polymer so that the substrate layer 110 may electrically insulate the electrode assembly from the outside.

The substrate layer 110 may have a single film structure made of any one material. In contrast, the substrate layer 110 may have a composite film structure in which two or more materials form respective layers.

Specifically, the substrate layer 110 according to the present invention may include a first layer, a second layer and/or an adhesive layer. In this case, the thickness of the substrate layer 110 refers to the total thickness of the first layer, the second layer, and/or the adhesive layer. The first layer may be disposed on the outermost layer of the pouch film laminate, and the second layer may be disposed between the first layer and the gas barrier layer. The adhesive layer may be disposed between the first layer and the second layer or disposed between the second layer and the gas barrier layer. The first layer, the second layer, and the adhesive layer may each be made of different materials and/or materials having different physical properties. Interfaces may be present between the first layer, the second layer, and the adhesive layer. This means that the first layer, the second layer, and the adhesive layer are different layers and may be formed separately. Meanwhile, the substrate layer 110 may include only an adhesive layer without the first layer and the second layer. **In** this case, the adhesive layer may be disposed on the outermost layer of the pouch film laminate.

The first layer may be a layer disposed on the outermost layer of the pouch film laminate. **In** this case, the first layer may serve to prevent moisture from penetrating from the outside of the pouch. The first layer may be made of one or more materials selected from the group consisting of polyethylene, polypropylene, polycarbonate, polyethylene terephthalate, polyvinyl chloride, acrylic polymers, polyacrylonitrile, polyimide, polyamide, cellulose, aramid, nylon, polyester, polyparaphenylene benzobisoxazole, polyarylate, Teflon, and glass fibers. Preferably, the first layer may include at least one of polyester-based films, such as polyethylene terephthalate, polybutylene terephthalate, and the like, which have wear resistance and heat resistance, but the present invention is not limited thereto. More preferably, when the first layer includes polyethylene terephthalate (PET), it is flexible and is excellent in terms of external insulation, which makes it easy to manufacture the first layer with a thin thickness.

As described above, the second layer may be a layer disposed between the first layer and the gas barrier layer 120. **In** this case, the second layer may serve to improve the moldability of the pouch. The second layer may include at least one of polyamide-based films such as nylon 6, nylon 6,6, nylon MXD6, nylon 4,10, and the like, but the present invention is not limited thereto. Preferably, the second layer may include nylon 6. In this case, there is an advantage in that the moldability of the pouch may be improved due to the excellent elongation characteristics of nylon 6.

The thickness of the substrate layer 110 may range from 2.5% to 6.5%, specifically from 3.0% to 6.5%, and more specifically from 3.0% to 6.0% of the thickness of the pouch film laminate 100. When a ratio of the thickness of the substrate layer 110 to the thickness of the pouch film laminate 100 satisfies the above numerical range, the external insulation and chemical resistance of the pouch may be secured, and the energy density relative to the volume of the secondary battery may also be excellent because the overall thickness of the pouch is not thick.

The thickness of the substrate layer 110 may range from 5 µm to 30 µm, specifically from 5 µm to 25 µm, and more specifically from 5 µm to 20 µm. When the thickness of the substrate layer 110 satisfies the above range, the energy density relative to the volume of the secondary battery may be excellent because the overall thickness of the pouch is not thick, and the external insulation and chemical resistance of the pouch may also be secured.

### (2) Gas barrier layer

The gas barrier layer 120 is laminated between the substrate layer 110 and the sealant layer 130 to secure the mechanical strength of the pouch, block the entry of gas or moisture from the outside of the secondary battery, and prevent the leakage of electrolyte from the inside of the pouch-type battery case.

The gas barrier layer 120 according to the present invention includes stainless steel. Specifically, the gas barrier layer 120 may be manufactured by molding and/or processing a stainless-steel thin film. The gas barrier layer 120 including stainless steel has relatively low thermal conductivity and is thus effective in preventing or delaying heat diffusion to other cells in the event of thermal runaway and has relatively high toughness to suppress the occurrence of cracks in the pouch during use of the pouch-type battery.

In addition to iron (Fe), the stainless steel includes one or more selected from the group consisting of copper (Cu), chromium (Cr), manganese (Mn), nickel (Ni), magnesium (Mg), silicon (Si), zinc (Zn), molybdenum (Mo), carbon (C), phosphorus (P), sulfur (S), and nitrogen (N).

Specifically, the stainless steel may contain chromium in an amount of 10% by weight to 20% by weight, specifically 16% by weight to 20% by weight, and more specifically 18% by weight to 20% by weight. When the above numerical range is satisfied, the stainless steel has excellent corrosion resistance.

Also, the stainless steel may contain nickel in an amount of 5% by weight to 20% by weight, specifically 6% by weight to 15% by weight, and more specifically 8% by weight to 14% by weight. When the above numerical range is satisfied, the corrosion resistance of stainless steel against neutral and weak acids may be further improved.

The gas barrier layer 120 according to the present invention may have a thickness of 50 µm or more, specifically 50 µm to 100 µm, and more specifically 60 µm to 85 µm. When the thickness of the gas barrier layer 120 is less than 50 µm, the gas barrier layer 120 is not elongated evenly, and thus the elongation rate of the pouch film laminate may be lowered, thereby lowering the formability of the pouch and making it impossible to secure a sufficient forming depth of the pouch cup part. As a result, there is a problem in that it is difficult to implement a large-area pouch-type battery applied to electric vehicles. **In** addition, when the thickness of the gas barrier layer 120 is less than 50 µm, there is a problem in that the gas barrier properties of the gas barrier layer 120 may deteriorate.

The gas barrier layer 120 may have a melting point of 1,000°C or higher, specifically 1,200°C to 1,500°C, and more specifically 1,300°C to 1,450°C. When the melting point of the gas barrier layer 120 satisfies the above numerical range, structural collapse of the pouch may be prevented even when the temperature of the pouch cell drastically increases due to thermal runaway.

### (3) Sealant layer

The sealant layer 130 is used to completely seal the inside of the pouch-type battery case by performing thermal bonding at the sealing portion when the pouch-type battery case having an electrode assembly accommodated therein is sealed. For this purpose, the sealant layer 130 may be formed of a material having excellent thermal adhesive strength.

The sealant layer 130 may be formed of a material having insulation, corrosion resistance, and sealing properties. Specifically, because the sealant layer 130 comes into direct contact with the electrode assembly and/or electrolyte inside the pouch-type battery case, it may be formed of a material having insulation and corrosion resistance. Also, because the sealant layer 130 must completely seal the inside of the pouch-type battery case to block the movement of materials between the inside and the outside of the pouch-type battery case, it may be formed of a material having high sealing properties (for example, excellent thermal bonding strength). To secure such insulation, corrosion resistance and sealing properties, the sealant layer 130 may be formed of a polymer material.

The sealant layer 130 may be made of one or more materials selected from the group consisting of polyethylene, polypropylene, polycarbonate, polyethylene terephthalate, polyvinyl chloride, acrylic polymers, polyacrylonitrile, polyimide, polyamide, cellulose, aramid, nylon, polyester, polyparaphenylene benzobisoxazole, polyarylate, Teflon, and glass fibers. Preferably, the sealant layer 130 may be made of a polyolefin-based resin such as polypropylene (PP) and/or polyethylene (PE). In this case, the polypropylene may be composed of cast polypropylene (CPP), acid-modified polypropylene (PPa), a polypropylene-ethylene copolymer, and/or a polypropylene-butylene-ethylene terpolymer.

The sealant layer 130 may have a thickness of 30 µm to 130 µm, specifically 50 µm to 120 µm, and more specifically 70 µm to 100 µm. When the thickness of the sealant layer satisfies the above range, it has an effect of securing the moldability of the pouch film laminate while securing the sealing strength of the sealing portion.

Meanwhile, the sealant layer 130 according to the present invention may have a single film structure made of any one material. **In** contrast, the sealant layer 130 may have a composite film structure in which two or more materials form respective layers. Specifically, the sealant layer 130 may include a first sealant layer and a second sealant layer. **In** this case, the first sealant layer may be a layer disposed adjacent to the gas barrier layer, and the second sealant layer may be a layer disposed on the first sealant layer. The first sealant layer and the second sealant layer may each be made of different materials and/or materials having different physical properties. An interface may be present between the first sealant layer and the second sealant layer. This means that the first sealant layer and the second sealant layer are different layers and may be formed separately.

To secure long-term adhesion performance between the gas barrier layer and the first sealant layer, it is particularly preferable that the first sealant layer is made of acid-modified polypropylene (PPa). Here, the acid-modified polypropylene may be maleic anhydride polypropylene (MAH PP).

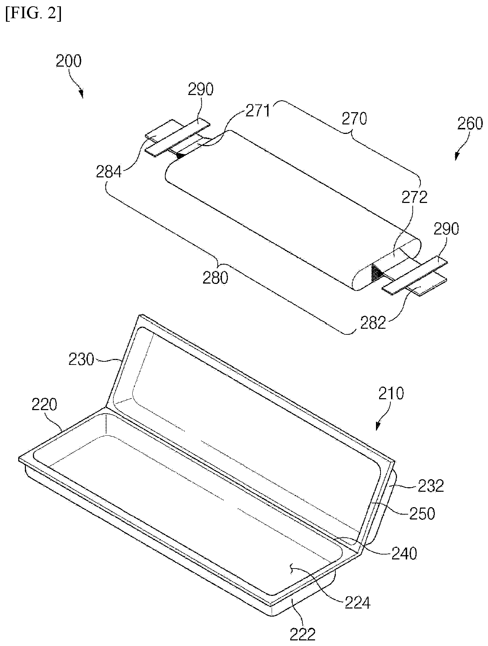

The second sealant layer may be formed of a material having insulation, corrosion resistance, and sealing properties. Specifically, because the second sealant layer comes into direct contact with the electrode assembly (260 in FIG. 2) and/or the electrolyte inside an accommodation space (224 in FIG. 2), it may be formed of a material having insulation and corrosion resistance. Also, because the second sealant layer has to completely seal the inside of the battery case to block the movement of materials between the inside and outside of the battery case, it may be formed of a material having high sealing properties. To ensure such insulation, corrosion resistance and sealing properties, the second sealant layer may be made of one or more materials selected from the group consisting of polyethylene, polypropylene, polycarbonate, polyethylene terephthalate, polyvinyl chloride, acrylic polymers, polyacrylonitrile, polyimide, polyamide, cellulose, aramid, nylon, polyester, polyparaphenylene benzobisoxazole, polyarylate, Teflon, and glass fibers. Preferably, the second sealant layer may be made of a polyolefin-based resin such as polypropylene (PP) and/or polyethylene (PE). In this case, the polypropylene may be composed of cast polypropylene, acid-modified polypropylene, a polypropylene-ethylene copolymer, and/or a polypropylene-butylene-ethylene terpolymer. Here, the acid-modified polypropylene may be maleic anhydride polypropylene (MAH PP). More preferably, the second sealant layer may include cast polypropylene (CPP), which has heat sealability and high tensile strength.

### Pouch-type secondary battery

Next, the pouch-type secondary battery according to the present invention will be described.

The pouch-type secondary battery according to the present invention has a pouch-type battery case having an electrode assembly accommodated therein, and the pouch-type battery case includes a pouch film laminate. Here, the pouch film laminate includes a substrate layer, a gas barrier layer, and a sealant layer, which are sequentially stacked, wherein the gas barrier layer includes stainless steel and has a thickness of 50 µm or more, and a thickness of the substrate layer ranges from 10% to 30% of the thickness of the gas barrier layer.

Hereinafter, each component of the pouch-type secondary battery of the present invention will be described in more detail with reference to FIG. 2. FIG. 2 is an exploded perspective view of a pouch-type secondary battery 200 according to the present invention. As shown in FIG. 2, the pouch-type secondary battery 200 of the present invention may include a pouch-type battery case 210, an electrode assembly 260, an electrode lead 280, an insulating part 290, and an electrolyte (not shown).

### (1) Pouch-type battery case

The pouch-type battery case 210 may have an electrode assembly 260 accommodated therein. The pouch-type battery case 210 may be manufactured by molding the pouch film laminate of the present invention described above. Because the detailed configuration and physical properties of the pouch film laminate are the same as described above, a detailed description thereof is omitted.

The pouch film laminate may be drawn, molded, or elongated by a punch or the like to manufacture the pouch-type battery case 210. As a result, the pouch-type battery case 210 may include a cup part 222 and an accommodation part 224. The accommodation part 224 refers to as a place configured to accommodate the electrode assembly, that is, an accommodation space formed in the shape of a pocket inside the cup part 222 as the cup part 222 is formed.

According to one embodiment of the present invention, the pouch-type battery case 210 may include a first case 220 and a second case 230, as shown in FIG. 2. The first case 220 includes an accommodation part 224 configured to accommodate the electrode assembly 260, and the second case 230 may cover the accommodation part 224 from above to prevent the electrode assembly 260 from falling out of the battery case 210. The first case 220 and the second case 230 may be manufactured so that one side of each of the first case 220 and the second case 230 can be connected to each other, as shown in FIG. 2, but the present invention is not limited thereto, and the first case 220 and the second case 230 may be manufactured in various ways, such as being separated from each other and manufactured separately.

According to another embodiment of the present invention, when a cup part is formed in the pouch film laminate, two symmetrical cup parts 222 and 232 in one pouch film laminate may be drawn and formed adjacent to each other. **In** this case, the cup parts 222 and 232 may be formed in the first case 220 and the second case 230, respectively, as shown in FIG. 2. After the electrode assembly 260 is accommodated in the accommodation part 224 provided in the cup part 222 of the first case 220, a bridge part 240 formed between the two cup parts 222 and 232 may be folded so that the two cup parts 222 and 232 can face each other. In this case, the cup part 232 of the second case 230 may be configured to accommodate the electrode assembly 260 from above. Accordingly, because the two cup parts 222 and 232 accommodate one electrode assembly 260, a thicker electrode assembly 260 may be accommodated compared to when there is only one cup part 222. Also, because one corner of the secondary battery 200 is formed by folding the pouch-type battery case 210, the number of corners to be sealed may be reduced when a sealing process is performed later. Accordingly, the processing speed of the pouch-type secondary battery 200 may be improved, and the number of sealing processes may be reduced.

The pouch-type battery case 210 may be sealed in a state in which the electrode assembly 260 is accommodated so that a portion (i.e., a terminal portion) of the electrode lead 280 to be described later is exposed. Specifically, when the electrode lead 280 is connected to an electrode tab 270 of the electrode assembly 260 and the insulating part 290 is formed on a portion of the electrode lead 280, the electrode assembly 260 may be accommodated in the accommodation part 224 provided in the cup part 222 of the first case 220, and the second case 230 may cover the accommodating part 224 from above. Next, an electrolyte is injected into the accommodation part 224, and a sealing portion 250 formed on the edge of the first case 220 and the second case 230 may be sealed.

The sealing portion 250 may serve to seal the accommodation part 224. Specifically, the sealing portion 250 may seal the accommodation part 224 by being formed along the edge of the accommodation part 224. The temperature at which the sealing portion 250 is sealed may range from 180°C to 250°C, specifically from 200°C to 250°C, and specifically from 210°C to 240°C. When the sealing temperature satisfies the above numerical range, the pouch-type battery case 210 may obtain sufficient sealing strength through thermal bonding.

According to the present invention, when the respective sealant layers of the first case 220 and the second case 230 are stacked so that the sealant layers come into contact with each other, and then sealed for 1.6 seconds under the conditions of 210°C and 1.2 MPa, the thickness of the sealant layer at the sealing portion 250 formed in the pouch-type battery case 210 may range from 54% to 86%, specifically from 55% to 85%, and more specifically from 60% to 85% of the thickness of the sealant layer of the pouch film laminate. When the thickness of the sealant layer of the sealing portion 250 relative to the thickness of the sealant layer of the pouch film laminate satisfies the above numerical range, there is an effect of maintaining insulation properties while securing sufficient sealing strength.

### (2) Electrode assembly

The electrode assembly 260 may be inserted into the pouch-type battery case 210, and sealed by the pouch-type battery case 210 after electrolyte injection.

The electrode assembly 260 may be formed by sequentially stacking a positive electrode, a separator, and a negative electrode. Specifically, the electrode assembly 260 may include two types of electrodes, (e.g., a positive electrode and a negative electrode) and a separator interposed between the electrodes to insulate the electrodes from each other.

The positive electrode and the negative electrode may have a structure in which an active material slurry is applied onto an electrode current collector in the form of a metal foil or metal mesh containing aluminum and copper, respectively. A slurry may typically be formed by stirring a granular active material, an auxiliary conductor, a binder, a conductive material, and the like in a state in which a solvent is added thereto. The solvent may be removed in a subsequent process.

A slurry obtained by mixing an electrode active material with a binder and/or a conductive material is applied onto a positive electrode current collector and a negative electrode current collector to manufacture a positive electrode and a negative electrode. Then, the positive electrode and the negative electrode may be stacked on both sides of the separator to manufacture the electrode assembly 260 in a predetermined shape. Types of the electrode assembly 260 include stack-type, jelly roll-type, stack-and-fold-type electrode assemblies, but the present invention is not limited thereto.

The electrode assembly 260 may include an electrode tab 270.

The electrode tab 270 may be connected to each of the positive and negative electrodes of the electrode assembly 260, and protrudes outward from the electrode assembly 260 to serve as a path for electrons to move between the inside and outside of the electrode assembly 260. The electrode current collector included in the electrode assembly 260 may be composed of a portion on which the electrode active material is applied and an end portion on which the electrode active material is not applied, that is, an uncoated portion. The electrode tab 270 may be formed by cutting the uncoated portion or by connecting a separate conductive member to the uncoated portion using ultrasonic welding or the like. As shown in FIG. 2, the electrode tabs 270 may protrude in different directions from the electrode assembly 260, but the present invention is not limited thereto, and the electrode tabs 270 may protrude in various directions, such as protruding side by side in the same direction from one side.

### (3) Electrode lead

The electrode lead 280 may supply electricity to the outside of the secondary battery 200. The electrode lead 280 may be connected to the electrode tab 270 of the electrode assembly 260 by spot welding and the like.

The electrode lead 280 may be connected to the electrode assembly 260 and may protrude to the outside of the pouch-type battery case 210 via the sealing portion 250. Specifically, one end of the electrode lead 280 may be connected to the electrode assembly 260, especially electrode tab 270, and the other end of the electrode lead 280 may protrude to the outside of the pouch-type battery case 210.

The electrode lead 280 includes a positive electrode lead 282 having one end connected to a positive electrode tab 272 and extending in a direction in which the positive electrode tab 272 protrudes, and a negative electrode lead 284 having one end connected to a negative electrode tab 274 and extending in a direction in which the negative electrode tab 274 protrudes. The other ends of both the positive electrode lead 282 and the negative electrode lead 284 may protrude to the outside of the battery case 210. Accordingly, electricity generated inside the electrode assembly 260 may be supplied to the outside. Also, because each of the positive electrode tab 272 and the negative electrode tab 274 protrudes in various directions, each of the positive electrode lead 282 and the negative electrode lead 284 may also extend in various directions. The positive electrode lead 282 and the negative electrode lead 284 may be made of different materials. That is, the positive electrode lead 282 may be made of the same aluminum (Al) material as the positive electrode current collector, and the negative electrode lead 284 may be made of the same copper (Cu) material as the negative electrode current collector or made of a copper material coated with nickel (Ni). A portion of the electrode lead 280 protruding to the outside of the battery case 210 may be formed as a terminal portion and electrically connected to an external terminal.

### (4) Insulating part

The insulating part 290 may prevent electricity generated from the electrode assembly 260 from flowing into the battery case 210 through the electrode lead 280 and maintain the sealing of the battery case 210. For this purpose, the insulating part 290 may be formed of a non-conductive material that does not conduct electricity well. In general, the insulating part 290 is easily attached to the electrode lead 280 and often made of relatively thin insulating tape or film, but the present invention is not limited thereto, and any member capable of insulating the electrode lead 280 may be used.

The insulating part 290 may be disposed to surround the outer peripheral surface of the electrode lead 280. Specifically, at least a portion of the electrode lead 280 may be surrounded by the insulating part 290. In this case, the insulating part 290 may be disposed between the electrode lead 280 and the pouch-type battery case 210. The insulating part 290 may be located so that the insulating part 290 is restricted to the sealing portion 250 where the first case 220 and the second case 230 of the pouch-type battery case 210 are sealed by thermal bonding, and the electrode lead 280 may be attached to the battery case 210.

### (5) Electrolyte

The pouch-type secondary battery 200 according to the present invention may further include an electrolyte (not shown) injected into the pouch-type battery case 210. The electrolyte is used to move lithium ions generated by the electrochemical reaction of the electrode during charging/discharging of the secondary battery 200, and may include a nonaqueous organic electrolyte solution, which is a mixture of a lithium salt and an organic solvent, or a polymer using a polymer electrolyte. Further, the electrolyte may include a sulfide-based, oxide-based, or polymer-based solid electrolyte, and such a solid electrolyte may be flexible to be easily deformed by an external force.

### [Mode for Invention]

Hereinafter, the present invention will be described in more detail through specific examples thereof. However, it should be understood that the following examples are merely illustrative to aid in understanding the present invention and are not intended to limit the scope of the present invention. It is obvious to those skilled in the art that various changes and modifications are possible within the scope and technical spirit of the present disclosure, and that such changes and modifications fall within the scope of the appended patent claims.

### EXAMPLES AND COMPARATIVE EXAMPLES

### Example 1: Manufacture of pouch film laminate

A first adhesive film having a width of 266 mm, a length of 50 m and a thickness of 3 µm and a polyethylene terephthalate (PET) film having a width of 266 mm, a length of 50 m and a thickness of 6 µm were sequentially stacked on one surface of a stainless steel thin film having a width of 266 mm, a length of 50 m and a thickness of 80 µm. A polypropylene (PP) film having a width of 266 mm, a length of 50 m and a thickness of 80 µm was stacked on the other surface of the stainless steel thin film. As a result, a pouch film laminate having a structure in which the polypropylene film, the stainless steel thin film, the first adhesive film, and the polyethylene terephthalate film were sequentially stacked was manufactured.

Here, the polypropylene film is a sealant layer, the stainless steel thin film is a gas barrier layer, and the first adhesive film and the polyethylene terephthalate film are substrate layers.

### Example 2: Manufacture of pouch film laminate

A pouch film laminate was manufactured in the same manner as in Example 1, except that a stainless steel thin film having a thickness of 60 µm was used.

### Example 3: Manufacture of pouch film laminate

A pouch film laminate was manufactured in the same manner as in Example 1, except that a stainless steel thin film having a thickness of 50 µm was used.

### Comparative Example 1: Manufacture of pouch film laminate

A pouch film laminate was manufactured in the same manner as in Example 1, except that a first adhesive film having a width of 266 mm, a length of 50 m and a thickness of 3 µm, a nylon film having a width of 266 mm, a length of 50 m and a thickness of 25 µm, a second adhesive film having a width of 266 mm, a length of 50 m and a thickness of 3 µm, and a polyethylene terephthalate (PET) film having a width of 266 mm, a length of 50 m and a thickness of 25 µm were sequentially stacked on one surface of a stainless steel thin film having a width of 266 mm, a length of 50 m and a thickness of 80 µm.

Here, the polypropylene film is a sealant layer, the stainless steel thin film is a gas barrier layer, and the first adhesive film, the nylon film, the second adhesive film, and the polyethylene terephthalate film are substrate layers.

### Comparative Example 2: Manufacture of pouch film laminate

A pouch film laminate was manufactured in the same manner as in Example 1, except that a stainless steel thin film having a thickness of 60 µm was used, and only a first adhesive film having a thickness of 3 µm was used as a substrate layer.

### Comparative Example 3: Manufacture of pouch film laminate

A pouch film laminate was manufactured in the same manner as in Example 1, except that a stainless steel thin film having a thickness of 45 µm was used.

### Experimental Example 1: Evaluation of forming depth and moldability of pouch film laminate

The forming depth of each of the pouch film laminates manufactured in Examples 1 to 3 and Comparative Examples 1 to 3 was measured. Specifically, after cutting the pouch film laminate to a width of 266 mm and a length of 200 mm, the cut pouch film laminate was processed and stretched using a pouch molding apparatus (Kwangshin Hi-Tech Co., Ltd.) to mold a cup part having a width of 90 cm and a length of 160 cm until the pouch film laminate was broken, and the forming depth (units: mm) of the cup part was then measured. The results are shown in Table 1 below.

Also, cup molding was performed a total of 10 times on the pouch film laminate, and it was visually confirmed whether the pouch film laminate was broken during the molding of the cup part. The results are shown in Table 1 below.
- Good: No pouch film laminates were broken when measured 10 times
- Poor: At least one touch film laminate was broken when measured 10 times

### Experimental Example 2: Evaluation of insulation of pouch film laminate

Each of the pouch film laminates manufactured in Examples 1 to 3 and Comparative Examples 1 to 3 was cut to a size of 90 mm × 150 mm, and then stored in a vacuum oven at 60°C for 24 hours. Thereafter, the dielectric breakdown voltage was measured in a dry room using a dielectric breakdown voltage measurement apparatus (Hioki E.E. Corp.). Specifically, aluminum thin films each having a thickness of 5t were disposed on the upper and lower surfaces of the pouch film laminate. Thereafter, a positive electrode of the measurement apparatus was connected to the gas barrier layer of the pouch film laminate and a negative electrode of the measurement apparatus was connected to the aluminum thin film in contact with the substrate layer. Then, an applied voltage when the leakage current measured while applying a voltage at a rate of 100 V/s was 0.5 mA or more was measured as the dielectric breakdown voltage, and insulation was then evaluated based on the following criteria.
- Good: Dielectric breakdown voltage is 1,000 V or more
- Poor: Dielectric breakdown voltage is less than 1,000 V

**[Table 1]**

| | Example 1 | Example 2 | Example 3 | Comparative Example 1 | Comparative Example 2 | Comparative Example 3 |
|---|---|---|---|---|---|---|
| Substrate layer | PET (6 µm) + adhesive layer (3 µm) | PET (6 µm) + adhesive layer (3 µm) | PET (6 µm) + adhesive layer (3 µm) | PET (25 µm) + adhesive layer (3 µm) + Nylon (25 µm) + adhesive layer (3 µm) | adhesive layer (3 µm) | PET (6 µm) + adhesive layer (3 µm) |
| Gas barrier layer | STS (80 µm) | STS (60 µm) | STS (50 µm) | STS (80 µm) | STS (60 µm) | STS (45 µm) |
| Sealant layer | PP (80 µm) | PP (80 µm) | PP (80 µm) | PP (80 µm) | PP (80 µm) | PP (80 µm) |
| Thickness of pouch film laminate (µm) | 169 | 149 | 139 | 216 | 143 | 134 |
| Thickness of substrate layer/thickness of gas barrier layer × 100 (%) | 11 | 15 | 18 | 70 | 5 | 20 |
| Thickness of substrate layer/ thickness of pouch film laminate × 100 (%) | 5.33 | 6.04 | 6.47 | 25.93 | 2.10 | 6.72 |
| Forming depth (mm) | 10 | 9 | 8 | 10 | 8 | 6 |
| Moldability evaluation | Good | Good | Good | Good | Poor | Poor |
| Insulation evaluation | Good | Good | Good | Good | Poor | Good |

As shown in Table 1, it can be seen that Examples 1 to 3 in which the gas barrier layer containing stainless steel had a thickness of 50 µm or more and the thickness of the substrate layer was 10 to 30% of the thickness of the gas barrier layer had a greater forming depth of the cup part and exhibited excellent pouch moldability compared to those of Comparative Examples 2 and 3, and had superior insulation compared to that of Comparative Example 2.

On the other hand, Comparative Example 1 had a similar level of moldability as Examples, but had a drawback in that the cell energy density decreased as the thickness of the pouch film laminate exceeded 200 µm, and the manufacturing process costs increased because the substrate layer had a four-layer structure. It can be seen that Comparative Example 2 had inferior moldability compared to those of Examples 1 to 3, and the insulation of the pouch was not secured because the substrate layer was thin. Also, it can be seen that Comparative Example 3 had inferior moldability compared to those of Examples 1 to 3.

### [Brief description of main parts in the drawings]

100: pouch film laminate
110: substrate layer
120: gas barrier layer
130: sealant layer
200: pouch-type secondary battery
210: pouch-type case
220: first case
222: cup part
224: accommodation part
230: second case
232: cup part
240: bridge part
250: sealing portion
260: electrode assembly
270: electrode tab
272: positive electrode tab
274: negative electrode tab
280: electrode lead
282: positive electrode lead
284: negative electrode lead
290: insulating part

## Claims

1. A pouch film laminate comprising a substrate layer, a gas barrier layer, and a sealant layer, which are sequentially stacked, wherein:
the gas barrier layer includes stainless steel and has a thickness of 50 µm or more, and
a thickness of the substrate layer ranges from 10% to 30% of the thickness of the gas barrier layer.

2. The pouch film laminate of claim 1, wherein the pouch film laminate has a thickness of 200 µm or less.

3. The pouch film laminate of claim 1, wherein the thickness of the substrate layer ranges from 2.5% to 6.5% of the thickness of the pouch film laminate.

4. The pouch film laminate of claim 1, wherein the substrate layer has a thickness of 5 µm to 20 µm.

5. The pouch film laminate of claim 1, wherein the substrate layer includes polyethylene terephthalate (PET).

6. The pouch film laminate of claim 1, wherein the gas barrier layer has a thickness of 50 µm to 100 µm.

7. The pouch film laminate of claim 1, wherein the gas barrier layer has a melting point of 1,000°C or higher.

8. The pouch film laminate of claim 1, wherein the stainless steel contains chromium in an amount of 10% by weight to 20% by weight.

9. The pouch film laminate of claim 1, wherein the stainless steel contains nickel in an a mount of 5% by weight to 20% by weight.

10. A pouch-type secondary battery comprising a pouch-type battery case in which an electrode assembly is accommodated, wherein:
the pouch-type battery case includes a pouch film laminate,
the pouch film laminate includes a substrate layer, a gas barrier layer, and a sealant layer, which are sequentially stacked,
the gas barrier layer includes stainless steel and has a thickness of 50 µm or more, and
a thickness of the substrate layer ranges from 10% to 30% of the thickness of the gas barrier layer.
